# EUROPEAN PATENT APPLICATION

(11) **EP 3 626 443 A1**
(43) Date of publication of application: **25.03.2020**
(21) Application number: 18275148.7
(22) Date of filing: 20.09.2018
(51) Int. Cl.: B29D 99/00, B29C 35/08, B29C 33/38, B33Y 80/00, B29L 31/26, B29L 31/30, B29L 31/00, B64C 3/34

(54) **SEALING METHOD AND APPARATUS FOR SEALING**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A method and apparatus for applying a seal to a structure, for example sealing an aircraft fuel tank. The method comprises: providing a mould part (600); positioning the mould part (600) against a surface (203) of the structure thereby to create a mould cavity (700) between the mould part (600) and the surface (203); introducing a sealant into the mould cavity (700); curing the sealant within the mould cavity (700) thereby to apply the seal to the surface (203); and removing the mould part (600) from the surface (203) with the seal applied thereto. The sealant may be a UV curing sealant and curing the sealant may comprise passing UV light through the mould part (600).

## Description

### FIELD OF THE INVENTION

The present invention relates to methods and apparatuses for applying seals to structures.

### BACKGROUND

Many aircraft comprise fuel tanks in the aircraft wings defined by structural portions of the wings such as wing spars and wing skins.

It tends to be critical for the fuel tanks to be effectively sealed to prevent the unwanted introduction into the fuel tanks of water, foreign bodies, and contaminants, and also to prevent fuel leaking from the fuel tanks. Fuel tanks may include over-seals that are applied over aircraft fasteners within the fuel tanks, and also seals along the interface between the structural members that define the fuel tanks.

Conventionally, the sealing of aircraft fuel tanks is a manual process in which a flowable sealant is injected or dispensed from a dispenser onto a desired area of the aircraft. This sealant may be manipulated, for example "smoothed out", using a brush or other tool.

Different features within aircraft fuel tanks may be sealed in different ways. For example, it may be desirable to seal different areas with different thicknesses of sealant, or with different types of sealants (e.g. sealants having different compositions). To provide this, an aircraft wing tank may be sealed by applying sealant(s) in multiple layers or stages, with each layer or stage being cured before a subsequent layer or stage is applied. Sealants used to seal aircraft wing tanks may require many hours to fully cure. Thus, the sealing operation may be a lengthy process.

It is known to apply individual, pre-moulded caps over fastener heads to seal fastener heads in an aircraft fuel tank.

### SUMMARY OF THE INVENTION

In a first aspect, the present invention provides a method of applying a seal to a surface of a structure. The method comprises: providing a mould part; positioning the mould part against the surface thereby to create a mould cavity between the mould part and the surface; introducing a sealant into the mould cavity; curing the sealant within the mould cavity thereby to apply the seal to the surface; and removing the mould part from the surface with the seal applied thereto.

Providing the mould part may comprise: measuring the surface of the structure; using the measurements of the surface, creating a first digital model, the first digital model being a digital model of the surface; using the first digital model, creating a second digital model, the second digital model being a digital model of the mould part; and, using the second digital model, producing the mould part. Producing the mould part may comprise, using the second digital model, performing an additive manufacturing process to fabricate the mould part.

The mould part may be configured to allow the passage therethrough of electromagnetic radiation. The sealant may be an electromagnetic radiation curing sealant. The step of curing the sealant may comprises illuminating the sealant with electromagnetic radiation by causing electromagnetic radiation to pass through the mould part onto the sealant within the mould cavity. The electromagnetic radiation may comprise ultraviolet or visible light. The mould part may be a transparent or translucent member.

The mould part may comprise one or more locating features for locating the mould part against the surface at a predetermined location. Positioning the mould part against the surface may comprise using the locating features to locate the mould part against the surface at the predetermined location.

The mould part may define one or more features selected from the group of features consisting of mating surfaces, landings, and housings for receiving other entities, such that the seal comprises the one or more features.

The structure may be a wall of an aircraft fuel tank. The structure may comprise multiple structural components attached together by a plurality of fasteners.

In a further aspect, the present invention provides apparatus for applying a seal to a structure. The apparatus comprises: means for providing a mould part; means for introducing a sealant into a mould cavity formed by positioning the mould part against the surface, the mould cavity being defined between the mould part and the surface; and means for curing the sealant within the mould cavity thereby to apply the seal to the surface.

The means for providing the mould part may comprise: a three-dimensional scanner for measuring the surface of the structure; one or more processors for: using the measurements of the surface, creating a first digital model, the first digital model being a digital model of the surface; and, using the first digital model, creating a second digital model, the second digital model being a digital model of the mould part; and additive manufacturing apparatus configured to, using the second digital model, produce the mould part.

The means for curing the sealant may comprise a source of electromagnetic radiation for illuminating the sealant within the mould cavity.

In a further aspect, the present invention provides a method of producing a mould part for applying a seal to a surface of a structure. The method comprises: measuring a surface of the structure; using the measurements of the surface, creating a digital model of the surface; using the digital model of the surface, creating a digital model of the mould part, wherein, when the digital model of the mould part is positioned against the digital model of the surface, the digital models define a digital representation of a mould cavity between the digital model of the mould part and the digital model of the surface; and, using the second digital model, producing the mould part.

In a further aspect, the present invention provides a mould part produced in accordance with any preceding aspect.

### BRIEF DESCRIPTION OF THE DRAWINGS

Figure 1 is a schematic illustration (not to scale) of an example aircraft;
Figure 2 is a schematic illustration (not to scale) showing a side view cross section of a joint structure or interface on the aircraft;
Figure 3 is a process flow chart showing certain steps of a sealing process for sealing the joint structure;
Figure 4 is a schematic illustration (not to scale) showing a side view cross section of a digital model of a surface of the joint structure;
Figure 5 is a schematic illustration (not to scale) showing a side view cross section of the digital model of the surface of the joint structure and a digital model of a mould part;
Figure 6 is a schematic illustration (not to scale) showing a side view cross section of a physical mould part;
Figure 7 is a schematic illustration (not to scale) showing a side view cross section of the mould part applied to the joint structure; and
Figure 8 is a schematic illustration (not to scale) showing a side view cross section of the sealed joint structure.

### DETAILED DESCRIPTION

It will be appreciated that relative terms such as horizontal and vertical, top and bottom, above and below, front and back, and so on, are used above merely for ease of reference to the Figures, and these terms are not limiting as such, and any two differing directions or positions and so on may be implemented rather than truly horizontal and vertical, top and bottom, and so on.

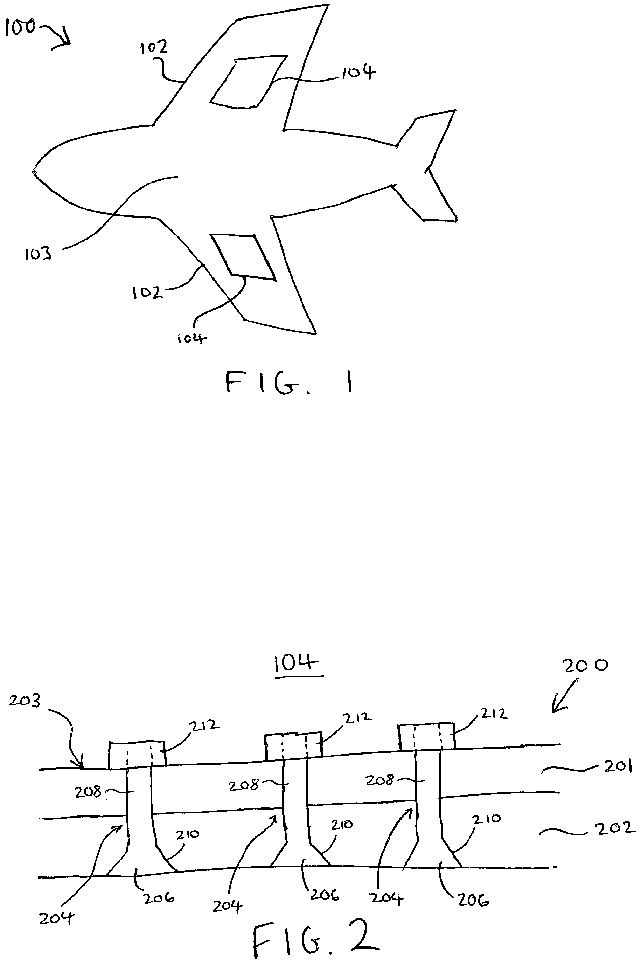

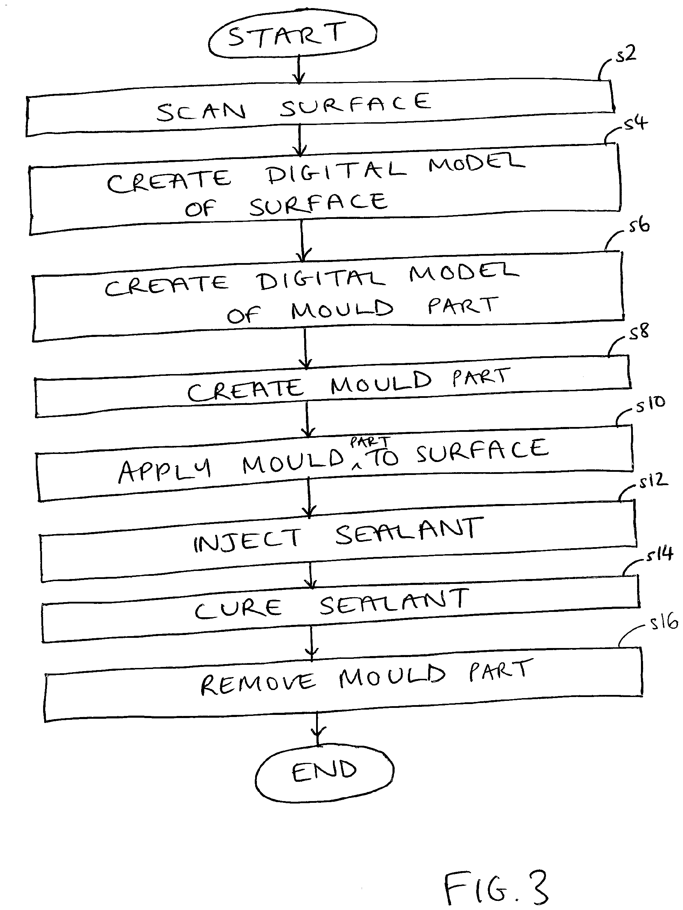

Figure 1 is a schematic illustration (not to scale) of an example aircraft 100 that will be used to illustrate an embodiment of a sealing process. An embodiment of the sealing process is described in more detail later below with reference to Figure 3.

The aircraft 100 comprises a pair of wings 102 faired into a fuselage 103. Each wing 102 carries an engine (not shown in Figure 1) and an internally located fuel tank 104. The fuel tanks 104 are configured to store aircraft fuel and provide that fuel to the engines.

In this example, the fuel tanks 104 are defined by structural portions or structural members of the wings 102 such as wing spars and wing skins. More specifically, the structural members of the aircraft wings 102 are arranged and fastened together to form the wings 102, and to define one or more volumes or cavities within each of the aircraft wings 102. These volumes or cavities are the aircraft fuel tanks 104.

The structural members of the aircraft wings 102 are attached together at interfaces or joints between those structural members. In this example, the structural members are fastened together by a plurality of fasteners.

Figure 2 is a schematic illustration (not to scale) showing a side view cross section of a joint structure or interface 200. The joint structure 200 comprises a joint between a first aircraft structural member 201 and a second aircraft structural member 202.

The first aircraft structural member 201 may be, for example, a wing spar which extends longitudinally along at least part of an aircraft wing 102.

The second aircraft structural member 202 may be, for example, an external wing skin.

In the orientation of Figure 2, a lower surface of the first aircraft structural member 201 is engaged flush against an upper surface of the second aircraft structural member 202. The second aircraft structural member 202 has lower surface that may define an outer surface of the aircraft 100.

The first aircraft structural member 201 and the second aircraft structural member 202 are secured together by means of a plurality of fasteners 204. The fasteners 204 may be an aligned, regularly spaced series of fasteners 204 extending longitudinally along a length of the joint structure 200. Although, for ease of depiction and clarity, Figure 2 shows only three fasteners 204, it will be understood by those skilled in the art that, in practice, typically, more than three fasteners will be used to secure together the structural members 201, 202.

In this example, each fastener 204 comprises a head 206 and an externally threaded shank 208. For each fastener 204, the head 206 of that fastener 204 engages a lower surface of the second aircraft structural member 202, and is located within a respective countersink 210 in the second aircraft structural member 202. For each fastener 204, the threaded shank 208 of that fastener 204 extends through the second aircraft structural member 202 and through the first aircraft structural member 201, and extends upwards from the upper surface of the first aircraft structural member 201. Each fastener 204 further comprises an internally threaded bolt 212 threadedly engaged with the externally threaded shank 208, the bolt 212 bearing against the upper surface of the first aircraft structural member 201 to provide clamp-up between the first aircraft structural member 201 and the second aircraft structural member 202.

In this embodiment, an aircraft fuel tank 104 is in the region above an upper surface 203 of the joint structure 200. In other words, a boundary of the fuel tank 104 is defined by the upper surface 203 of the joint structure 200. The upper surface 203 of the joint structure is defined by the upper surface of the first aircraft structural member 201, and the upper surfaces of the fasteners 204.

Figure 3 is a process flow chart showing certain steps of an embodiment of a sealing process. In this embodiment, the sealing process is implemented to seal the upper surface 203 of the joint structure 200, thereby to prevent or oppose leakage into or from the fuel tank 104.

At step s2, a three-dimensional (3D) scanner is used to scan (i.e. measure) the upper surface 203 of the joint structure 200. Examples of appropriate 3D scanners include, but are not limited to, industrial computed tomography scanners, structured-light 3D scanners, and laser scanners.

At step s4, a computer processes the measurements taken by the 3D scanner to create a digital 3D model of the upper surface 203 of the joint structure 200. In some embodiments, the 3D model of the upper surface 203 is created in a different, e.g. using 3D digital models of the individual components that make up the upper surface 203.

In some embodiments, a digital model of the seal that is to be fitted to the upper surface 203 is also created. The digital model of the seal tends to facilitate ensuring efficient coverage of the components of the upper surface 203 and uniform profiling of the sealant gasket.

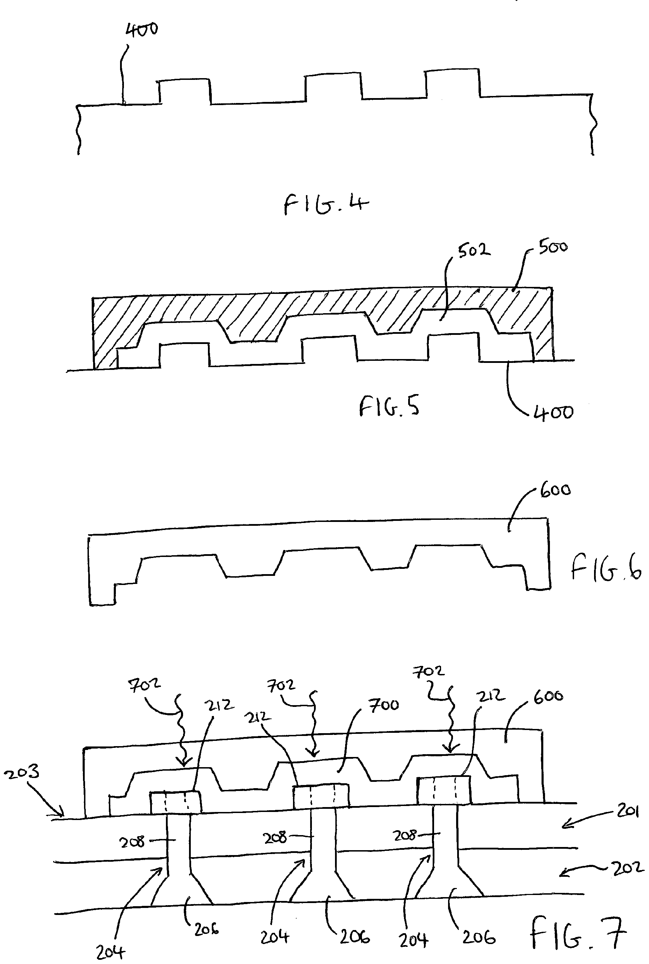

Figure 4 is a schematic illustration (not to scale) showing a side view cross section of the digital 3D model 400 of the upper surface 203 of the joint structure 200. This digital model 400 of the upper surface 203 will hereafter be referred to as the "first digital model" 400.

The portion of the first digital model 400 shown in Figure 4 corresponds to the portion of the joint structure 200 shown in Figure 2.

At step s6, a user operates the computer to create a digital 3D model of a mould part.

Figure 5 is a schematic illustration (not to scale) showing a side view cross section of the first digital model 400, and the digital 3D model of a mould part 500. This digital model of the mould part 500 will hereafter be referred to as the "second digital model" 500.

In this embodiment, the second digital model 500 is located above the first digital model 400. More specifically, an edge portion of the lower surface of the second digital model 500 contacts a portion of the upper surface of the first digital model 400. Also, central portions of the first and second digital models 500, 600 are spaced apart such that digital representation of a volume or cavity 502 is defined therebetween.

In this embodiment, the second digital model 500 is specified or created by a user, based on the first digital model 400, such that the digital cavity 502 defined between the two digital models 400, 500 has the shape, size, and position (e.g. relative to the first digital model 400/upper surface 203) as a desired sealing member for sealing the upper surface 203 of the joint structure 200 to prevent or oppose leakage into or from the fuel tank 104.

Any appropriate software tool may be utilised by the user operating the computer to create the second digital model 500.

At step s8, an additive manufacturing (AM) apparatus performs an AM process using the second digital model 500 to create a physical mould part. In other words, a physical mould part specified by the second digital model 500 is fabricated.

Figure 6 is a schematic illustration (not to scale) showing a side view cross section of the physical mould part 600 created at step s8.

The portion of the mould part 600 shown in Figure 6 corresponds to the portion of the second digital model 500 shown in Figure 5.

Any appropriate AM apparatus performing any appropriate AM process may be used to create the mould part 600.

In this embodiment, the mould part 600 is a substantially transparent object. For example, the mould part 600 may be made of a substantially transparent plastic. The mould part 600 may be a clear, colourless object. In some embodiments, the mould part 600 may be a translucent object.

In this embodiment, the mould part 600 is configured to allow the passage therethrough of electromagnetic radiation, including at least ultraviolet (UV) electromagnetic radiation. The mould part 600 may allow the passage therethrough of other wavelengths of electromagnetic radiation in addition to UV electromagnetic radiation, for example visible light.

At step s10, a user positions the mould part 600 onto the joint structure 200.

Figure 7 is a schematic illustration (not to scale) showing a side view cross section of the physical mould part 600 positioned onto the joint structure 200. The portions of the mould part 600 and joint structure 200 shown in Figure 7 correspond to those portions shown in Figures 2 and 6.

In this embodiment, the user places the mould part 600 onto the upper surface 203 of the joint structure 200 so that the mould part 600 occupies substantially the same position relative to the upper surface 203 of the joint structure 200 that the second digital model 500 occupies relative to the first digital model 400 at step s6. In some embodiments, the second digital model 500, and the mould part 600 produced therefrom, may comprise locator features (for example, locator pins, locator holes, etc.) that may be used to facilitate or enable the user to accurately position the mould part 600 on the upper surface 203.

Thus, the mould part 600 and the upper surface 203 define a volume therebetween, which is hereinafter referred to as the "mould cavity" and is indicated in Figure 7 by the reference numeral 700. In this embodiment, the mould cavity 700 has substantially the same size and shape as the digital cavity 502. Also, the mould cavity 700 has substantially the same position relative to the upper surface 203 as the digital cavity 502 has relative to the first digital model 400.

At step s12, a user injects a flowable (e.g. liquid) sealant into the mould cavity 700. Thus, in this embodiment the mould cavity 700 is substantially completely filled with an uncured sealant. In some embodiments, the mould part 600 may comprises an inlet through which the flowable sealant may be introduced into the mould cavity 700.

In this embodiment, the flowable sealant that is injected into the mould cavity 700 is a UV-curable sealant, i.e. a sealant that can be cured by illuminating that sealant with UV electromagnetic radiation. An example of an appropriate UV-curable sealant is, but is not limited to, RW-6162-71 manufactured by PPG Industries, Inc.

At step s14, a source of UV electromagnetic radiation illuminates the sealant within the mould cavity 700 with UV electromagnetic radiation.

As shown in Figure 7, UV electromagnetic radiation (indicated in Figure 7 by wavy arrows and the reference numerals 702) emitted by the source of UV electromagnetic radiation passes through the transparent mould part 600 and is incident on the sealant within the mould cavity 700. The UV electromagnetic radiation 702 incident on the sealant cures the sealant within the mould cavity 700 causing the sealant to harden and solidify.

Thus, a solid seal is formed over the upper surface 203 of the joint structure 200.

At step s16, the mould part 600 is removed from the upper surface 203 of the joint structure 200 leaving the solid seal in place.

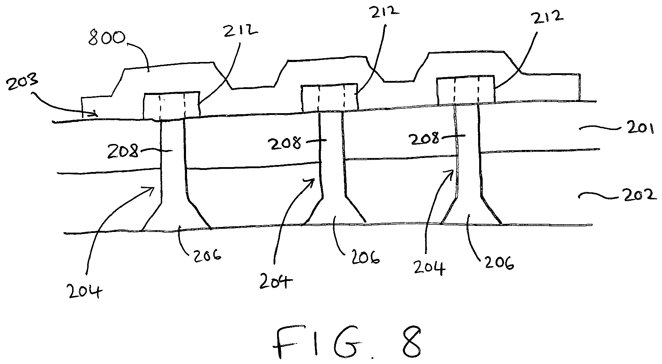

Figure 8 is a schematic illustration (not to scale) showing a side view cross section of the upper surface 203 of the joint structure 200 with the solidified sealant (i.e. the seal) 800 applied thereto, and after having the mould part 600 removed.

Thus, an embodiment of a sealing process to seal the upper surface 203 of the joint structure 200 is provided.

Advantageously, the above described sealing process tends to reduce workload on a human operator.

The above described sealing process tends to provide for improved sealing of the joint structure. The likelihood of leakage into or out of the aircraft fuel tank tends to be reduced.

The above described sealing process tends to provide for faster sealing of the joint structure.

The above described sealing process tends to provide for improved repeatability.

The above described sealing process tends to provide for attachment of the sealing structure to the joint structure. This tends to come about from the sealant being cured in-situ, directly onto the joint structure. Liquid sealant applied into the mould cavity may ingress into areas of the joint structure that it conventionally would not, and be cured therein.

The above described sealing process tends to provide that sealant is confined to specific, desired areas by the mould part, and the likelihood of unwanted, unintended, or accidental application of sealant to other areas of the aircraft tends to be reduced. This tends to reduce or eliminate a need for post-sealing cleaning processes.

The above described sealing process tends to provide a mass-saving compared to conventional sealing operations.

The above described sealing process tends to provide improved control over the thickness of the seal.

The above described sealing process tends to facilitate the sealing of more complex surfaces and features.

Advantageously, using the above described process tends to allow for the formation, in the seal, of beneficial features. For example, the mould part may be defined such that the resulting seal comprises (e.g. on its upper surface) one or more features selected from the group of features consisting of mating surfaces, landings, or housings for receiving other entities such as, but not limited to, electronic components, cables, wires, and sensors.

Apparatus, including the computer, for implementing the above arrangement, and performing the above described method steps, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine-readable storage medium such as computer memory, a computer disk, ROM, PROM etc., or any combination of these or other storage media.

It should be noted that certain of the process steps depicted in the flowchart of Figure 3 and described above may be omitted or such process steps may be performed in differing order to that presented above and shown in Figure 3. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the sealing process is implemented to seal a wall of a fuel tank located in an aircraft wing. However, in other embodiments, the sealing process is implemented to seal a different entity, such as a fuel tank located in a different part of an aircraft other than in a wing (such as in the fuselage), or a fuel tank located in a different entity other than an aircraft (such as a land-based or water-based vehicle), or a different type of tank or container other than a fuel tank.

In the above embodiments, the joint structure being sealed comprises two structural members attached together by a series of fasteners. However, in other embodiments, the structure to which the seal is applied is a different type of structure. For example, the structure may comprise a different number of structural members, for example, only one structural member, or more than two structural members. Also, in other embodiments, multiple structural members may be attached together in a different way other than by using fasteners, for example via an adhesive, or by welding.

In the above embodiments, the digital 3D model of the surface being sealed is created from a 3D scan of that surface. However, in other embodiments, the digital model of the surface to be sealed is created in a different way, for example based on one or more digital 3D computer aided design (CAD) models of the surface.

In the above embodiments, the mould part is fabricated using an AM (i.e. 3D printing) process. However, in other embodiments, the mould part is produced using a different process, for example a casting process and/or a computer numerical control (CNC) milling process.

In the above embodiments, the sealant is a UV-curable sealant which is cured via illumination with UV light, and the mould part is a transparent or translucent part configured to allow the passage therethrough of UV light. However, in other embodiments, the sealant is a different type of sealant other than UV-curable, and is cured in a different way. For example, in some embodiments, the sealant is configured to cure when illuminated with a different wavelength of electromagnetic radiation, such as visible light. In such embodiments, visible light may be passed through the mould part to cure the sealant. In some embodiments, the sealant is a multi-part or multi-component sealant; the multiple parts may be mixed together prior to introduction into the mould cavity, and the mixture may then cure in the mould cavity. In some embodiments, the sealant is configured to cure under the application of heat or moisture. In such embodiments, the mould part may be configured to allow for the transfer of heat and/or moisture from outside the mould cavity to inside the mould cavity thereby to cure the sealant. In some embodiments, the sealant is a tine-cure sealant that cures within a given amount of time at, e.g. room temperature.

## Claims

1. A method of applying a seal to a structure, the method comprising:
providing a mould part;
positioning the mould part against a surface of the structure thereby to create a mould cavity between the mould part and the surface;
introducing a sealant into the mould cavity;
curing the sealant within the mould cavity thereby to apply the seal to the surface of the structure; and
removing the mould part from the surface with the seal applied thereto.

2. The method of claim 1, wherein providing the mould part comprises:
measuring the surface of the structure;
using the measurements of the surface, creating a first digital model, the first digital model being a digital model of the surface;
using the first digital model, creating a second digital model, the second digital model being a digital model of the mould part; and
using the second digital model, producing the mould part.

3. The method of claim 2, wherein producing the mould part comprises, using the second digital model, performing an additive manufacturing process to fabricate the mould part.

4. The method of any of claims 1 to 3, wherein:
the mould part is configured to allow the passage therethrough of electromagnetic radiation;
the sealant is an electromagnetic radiation curing sealant; and
the step of curing the sealant comprises illuminating the sealant with electromagnetic radiation by causing electromagnetic radiation to pass through the mould part onto the sealant within the mould cavity.

5. The method of claim 4, wherein the electromagnetic radiation comprises ultraviolet or visible light.

6. The method of any of claims 1 to 5, wherein the mould part is a transparent or translucent member.

7. The method of any of claims 1 to 6, wherein:
the mould part comprises one or more locating features for locating the mould part against the surface at a predetermined location; and
positioning the mould part against the surface comprises using the locating features to locate the mould part against the surface at the predetermined location.

8. The method of any of claims 1 to 7, wherein the mould part defines one or more features selected from the group of features consisting of mating surfaces, landings, and housings for receiving other entities, such that the seal comprises the one or more features.

9. The method of any of claims 1 to 8, wherein the structure is a wall of an aircraft fuel tank.

10. The method of any of claims 1 to 9, wherein the structure comprises multiple structural components attached together by a plurality of fasteners.

11. Apparatus for applying a seal to a structure, the apparatus comprising:
means for providing a mould part;
means for introducing a sealant into a mould cavity formed by positioning the mould part against a surface of the structure, the mould cavity being defined between the mould part and the surface; and
means for curing the sealant within the mould cavity thereby to apply the seal to the surface.

12. The apparatus according to claim 11, wherein the means for providing the mould part comprises:
a three-dimensional scanner for measuring the surface of the structure;
one or more processors for:
using the measurements of the surface, creating a first digital model, the first digital model being a digital model of the surface; and,
using the first digital model, creating a second digital model, the second digital model being a digital model of the mould part; and
additive manufacturing apparatus configured to, using the second digital model, produce the mould part.

13. The apparatus according to claim 11 or 12, wherein the means for curing the sealant comprises a source of electromagnetic radiation for illuminating the sealant within the mould cavity.

14. A method of producing a mould part for applying a seal to a structure, the method comprising:
measuring a surface of the structure;
using the measurements of the surface, creating a digital model of the surface;
using the digital model of the surface, creating a digital model of the mould part, wherein, when the digital model of the mould part is positioned against the digital model of the surface, the digital models define a digital representation of a mould cavity between the digital model of the mould part and the digital model of the surface; and,
using the second digital model, producing the mould part.

15. A mould part produced in accordance with the method of claim 14.
